# EUROPEAN PATENT APPLICATION

(11) **EP 3 333 592 A2**
(43) Date of publication of application: **13.06.2018**
(21) Application number: 17205334.0
(22) Date of filing: 05.12.2017
(51) Int. Cl.: G01S 15/04, G01S 7/527, G01S 15/10

(54) **ULTRASONIC SENSOR**

(30) Priority: 09.12.2016 JP 2016239538
(71) Applicant: ROHM CO., LTD., Kyoto 615-8585 (JP)
(72) Inventor: MISHIMA, Kazuma, Kyoto, 615-8585 (JP)
(74) Representative: Isarpatent

(57) **Abstract**

An ultrasonic sensor (100) includes a transmitter (10) configured to transmit an output wave signal (W1) in an ultrasonic region using a piezoelectric element (1), a receiver (20) configured to receive an input wave signal (W2) in the ultrasonic region using the piezoelectric element (1) or an additional piezoelectric element, and a logic part (30) configured to control the transmitter (10) and the receiver (20). The transmitter (10) is configured to superimpose ID information on the output wave signal (W1). The logic part (30) is configured to perform proximity detection and distance measurement of a detection object (200) by identifying the input wave signal (W2) based on the ID information.

## Description

### TECHNICAL FIELD

The present disclosure relates to an interference measure of an ultrasonic sensor (identification of its own wave).

### BACKGROUND

Ultrasonic sensors that perform proximity detection and distance measurement of a detection object by transmitting an output wave signal in an ultrasonic range and receiving its reflected wave signal have been put to practical use.

However, if another ultrasonic sensor exists in the vicinity of such a conventional ultrasonic sensor, an output wave signal of the other ultrasonic sensor may be erroneously recognized as a reflected wave signal of the conventional ultrasonic sensor. Thus, there is a risk of interfering with proximity detection and distance measurements of a detected object.

### SUMMARY

Some embodiments of the present disclosure provide an ultrasonic sensor which prevents interference with another ultrasonic sensor.

According to an aspect of the present disclosure, there is provided an ultrasonic sensor, including: a transmitter configured to transmit an output wave signal in an ultrasonic region using a piezoelectric element; a receiver configured to receive an input wave signal in the ultrasonic region using the piezoelectric element or an additional piezoelectric element; and a logic part configured to control the transmitter and the receiver, wherein the transmitter is configured to superimpose ID information on the output wave signal, and wherein the logic part is configured to perform proximity detection and distance measurement of a detection object by identifying the input wave signal based on the ID information.

Further, in the ultrasonic sensor, the transmitter may include a transformer configured to drive the piezoelectric element on a secondary winding side according to a driving current flowing through a primary winding; a current source configured to generate the driving current; a switch configured to turn on and off the driving current according to a burst signal; and a burst signal generation part configured to generate the burst signal.

Furthermore, in the ultrasonic sensor, the burst signal generation part may be further configured to perform at least one of duty control, phase control, and driving frequency control on the burst signal when the ID information is superimposed.

In addition, in the ultrasonic sensor, the burst signal generation part may be further configured to perform pulse setting number control on the burst signal when the ID information is superimposed.

Further, in the ultrasonic sensor, the logic part may be further configured to designate a driving frequency, a duty, a phase, and a pulse setting number for the burst signal as one set.

Furthermore, in the ultrasonic sensor, the current source may be further configured to perform current value control on the driving current when the ID information is superimposed.

In addition, in the ultrasonic sensor, the transmitter may be further configured to superimpose communication information on the output wave signal.

Further, in the ultrasonic sensor, the receiver may include an amplifier configured to amplify the input wave signal to generate an amplified output signal; and an A/D converter configured to convert the amplified output signal into a digital output signal.

Furthermore, in the ultrasonic sensor, the receiver may further include a comparator configured to compare the amplified output signal with a predetermined value to generate a zero-cross detection signal.

In addition, in the ultrasonic sensor, the logic part may be further configured to perform the proximity detection of the detection object, based on whether the input wave signal on which the ID information is superimposed is received or not.

Further, in the ultrasonic sensor, the logic part may be further configured to perform the distance measurement of the detection object based on an elapsed time from the transmission of the output wave signal on which the ID information is superimposed to the reception of the input wave signal on which the ID information is superimposed.

According to another aspect of the present disclosure, there is provided a vehicle comprising the ultrasonic sensor for performing the proximity detection and the distance measurement of the detection object.

### BRIEF DESCRIPTION OF DRAWINGS

FIG. 1 is a diagram illustrating an overall configuration of an ultrasonic sensor.
FIG. 2 is a diagram illustrating a transmission/reception operation of the ultrasonic sensor (an interference state with another ultrasonic sensor).
FIG. 3 is a diagram illustrating a configuration example of a transmitter.
FIG. 4 is a diagram illustrating a configuration example of a receiver.
FIG. 5 is a diagram illustrating a modulation example of a burst signal.
FIG. 6 is a diagram illustrating a driving waveform during pulse amplitude modulation (PAM).
FIG. 7 is a diagram illustrating a reflected waveform during PAM modulation.
FIG. 8 is a diagram illustrating a peak detection operation during PAM demodulation.
FIG. 9 is a diagram illustrating a reflected waveform during pulse phase modulation (PPM) (phase inversion).
FIG. 10 is a diagram illustrating a reflected waveform during PPM modulation (in-phase).
FIG. 11 is a diagram illustrating a reflected waveform during pulse frequency modulation (PFM) modulation (58 kHz).
FIG. 12 is a diagram illustrating a reflected waveform during PFM modulation (60 kHz).
FIG. 13 is a diagram illustrating an example of PAM modulation by driving current control (Id=161 mA).
FIG. 14 is a diagram illustrating an example of PAM modulation by driving current control (Id=331 mA).
FIG. 15 is a diagram illustrating an example of PAM modulation by driving current control (Id=496 mA).
FIG. 16 is an external view of a vehicle.

### DETAILED DESCRIPTION

### <Ultrasonic Sensor>

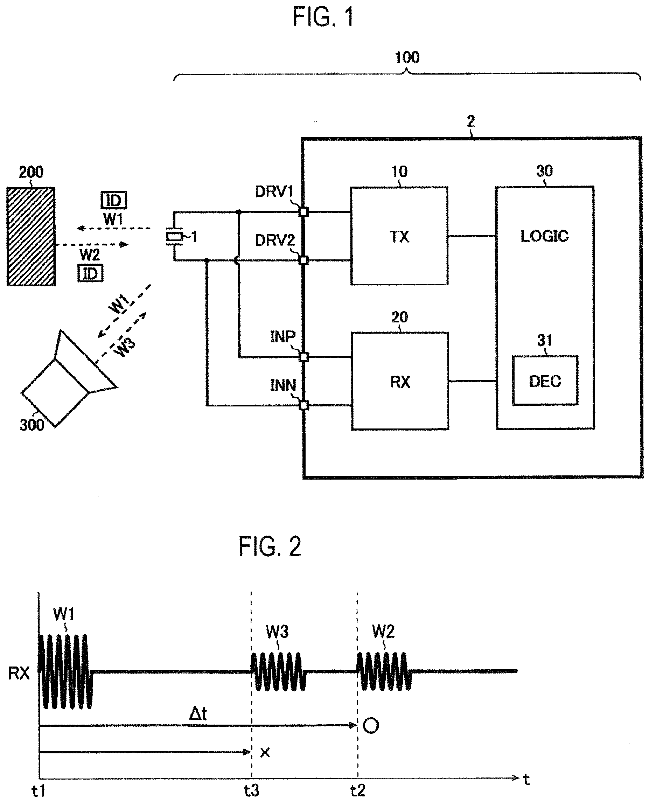

FIG. 1 is a diagram illustrating an overall configuration of an ultrasonic sensor. An ultrasonic sensor 100 according to the present configuration example is a proximity sensor (which is a type of an external sensor) having a piezoelectric element 1 and a semiconductor device 2. Such a proximity sensor performs proximity detection and distance measurement of a detection object 200 by i) transmitting an output wave signal W1 in an ultrasonic region (i.e., a frequency band not heard by a human ear, generally 20 kHz or higher) in an outward direction, and ii) receiving its reflected wave signal W2. Furthermore, a driving frequency used in the proximity sensor is generally 30 to 80 kHz.

The piezoelectric element 1 has a characteristic of generating a mechanical displacement (vibration) according to a voltage signal applied between both of its ends, and functions as a wave transmitter of the output wave signal W1. In addition, the piezoelectric element 1 has a characteristic of generating an electromotive force between both ends of the piezoelectric element 1 according to the mechanical displacement (vibration) applied thereto, and functions as a wave receiver of the reflected wave signal W2. Furthermore, a perovskite type ceramic (barium titanate, lead titanate, lead titanate zirconate, etc.) or the like may be appropriately used as a material of the piezoelectric element 1.

The semiconductor device 2 is a control element that manages a transmission operation of the output wave signal W1 and a reception operation of the reflected wave signal W2 using the piezoelectric element 1, and is configured by integrating a transmitter 10, a receiver 20, and a logic part 30. In addition, the semiconductor device 2 has output terminals DRV1 and DRV2, and input terminals INP and INN for establishing electrical connection with the outside of the device.

The transmitter 10 transmits the output wave signal W1 using the piezoelectric element 1 externally connected between the output terminals DRV1 and DRV2. In addition, the transmitter 10 includes a device that superimposes ID information of the ultrasonic sensor 100, or the ID information and any proper communication information (e.g., various data, commands, or the like) by performing a modulation process of the output wave signal W1 according to an instruction (e.g., a register storage value) from the logic part 30.

The receiver 20 receives the input wave signal in an ultrasonic region (i.e., the reflected wave signal W2 returning from the detection object 200 or an output wave signal W3 transmitted from another ultrasonic sensor 300) using the piezoelectric element 1 externally connected between the input terminals INP and INN.

In this manner, in the example of this drawing, the common piezoelectric element I is externally connected between the output terminals DRV1 and DRV2, and between the input terminals INP and INN, and the piezoelectric element 1 is shared by both the transmitter 10 and the receiver 20 as a wave transceiver.

However, if a piezoelectric element different from the piezoelectric element 1 is externally connected between the input terminals INP and INN, a wave transmitter and a wave receiver may be separately prepared. Furthermore, if there is no such need and if reduction of external terminals should be prioritized, the output terminals DRV1 and DRV2 and the input terminals INP and INN may be integrated as a set of input/output terminals, and both the transmitter 10 and the receiver 20 may be connected in parallel with the input/output terminals in the semiconductor device 2.

The logic part 30 is an element that controls the transmitter 10 and the receiver 20 during proximity detection and distance measurement of the detection object 200 (i.e., detection of whether or not there is an obstacle in the vicinity), and particularly includes a demodulation processor 31 that performs a demodulation process of the input wave signal received by using the piezoelectric element 1 and has a function that identifies the input wave signal based on whether or not the ID information of the ultrasonic sensor 100 is superimposed on the input wave signal. Furthermore, in the demodulation process of the input wave signal, for example, the input wave signal within a predetermined period may be captured by a microcomputer and demodulated by a demodulation method that matches a modulation method of the output wave signal W1.

As described above, since the ultrasonic sensor 100 according to the present configuration example can recognize the reflected wave signal W2 on which the ID information of the ultrasonic sensor 100 is superimposed, interference from the other ultrasonic sensor 300 becomes difficult. Hereinafter, a transmission/reception operation of the ultrasonic sensor 100 will be specifically described with reference to the drawings.

### <Transmission/Reception Operation>

FIG. 2 is a diagram illustrating a transmission/reception operation of the ultrasonic sensor 100 (a state in which interference with another ultrasonic sensor 300 may occur). In the ultrasonic sensor 100, a distance between the ultrasonic sensor 100 and the detection object 200 can be calculated by measuring a required time Δt (= t2-t1) from the transmission of the output wave signal W1 at time t1 to the reception of the reflected wave signal W2 at time t2. Furthermore, the ultrasonic sensor 100 can perform proximity detection (existence confirmation) of the detection object 200 based on whether the reflected wave signal W2 is received or not.

When the output wave signal W3 of another ultrasonic sensor 300 is received earlier than the reflected wave signal W2 of its own ultrasonic sensor at time t3, the conventional ultrasonic sensor erroneously recognizes this as the reflected wave signal W2 of its own ultrasonic sensor, having a possibility of hindering the proximity detection and distance measurement of the detection object.

On the other hand, since the ultrasonic sensor 100 according to the present configuration example can ignore the output wave signal W3 on which the ID information of the ultrasonic sensor 100 is not superimposed, no interference occurs even if another ultrasonic sensor 300 exists in the vicinity.

In addition, if any communication information as well as the ID information of the ultrasonic sensor 100 is superimposed on the output wave signal W1, it is also possible to perform, for example, preliminary arbitration to avoid mutual interference between the ultrasonic sensor 100 and another ultrasonic sensor 300.

Furthermore, the proximity detection result and the distance measurement result of the detection object 200 obtained by the ultrasonic sensor 100 may be sequentially output to an arithmetic processing unit (central processing unit (CPU) or the like) as a host, or may be stored in a register (not shown), and the results may be read out from the arithmetic processing unit at an any time.

### <Transmitter>

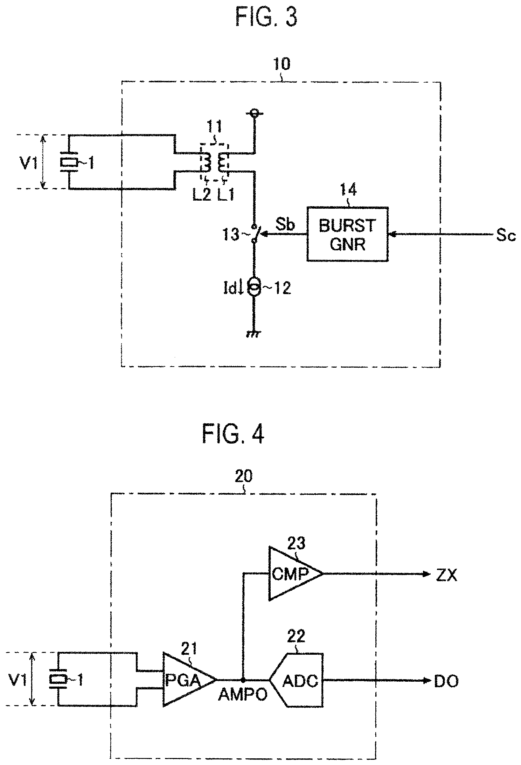

FIG. 3 is a diagram illustrating one configuration example of the transmitter 10. The transmitter 10 according to the present configuration example includes a transformer 11, a current source 12, a switch 13, and a burst signal generation part 14.

The transformer 11 includes a primary winding LI and a secondary winding L2 electromagnetically coupled to each other, and drives the piezoelectric element 1 connected between both ends of the secondary winding L2 depending on a driving current Id flowing through the primary winding L1. By using the transformer 11 to amplify the transmitter 10 in this manner, it is possible to increase a piezoelectric element voltage V1(= a voltage applied across the piezoelectric element 1) to a voltage value sufficient to drive the piezoelectric element 1 even if a power source voltage supplied to the transmitter 10 is not so high.

The current source 12 is connected between the switch 13 and a ground terminal to generate a predetermined driving current Id.

The switch 13 is connected between the primary winding L1 of the transformer 11 and the current source 12, and performs ON/OFF switching of the driving current Id (= electrical connection/disconnection of a current path through which the driving current Id flows in the example of this drawing) depending on a burst signal Sb.

The burst signal generation part 14 generates the burst signal Sb (= a driving pulse signal) to perform ON/OFF driving of the switch 13. The burst signal Sb is a voltage signal in the form of a rectangular wave, a triangular wave or a sinusoidal wave which is intermittently driven at a predetermined driving frequency Fd. The burst signal generation part 14 also serves to receive a modulation control signal Sc (for example, a register setting value) from the logic part 30, and to modulate the burst signal Sb by a predetermined modulation method (a pulse amplitude modulation (PAM) method, a pulse phase modulation (PPM) method, or a pulse frequency modulation (PFM) method) when the ID information of the ultrasonic sensor 100 is superimposed on the output wave signal W1 (details of which will be described later).

### <Receiver>

FIG. 4 is a diagram illustrating one configuration example of the receiver 20. The receiver 20 according to the present configuration example includes an amplifier 21, an analogue-to-digital (AD) converter 22, and a comparator 23.

The amplifier 21 amplifies the piezoelectric element voltage V1 (corresponding to the input wave signal) to generate an amplified output signal AMPO. A programmable gain amplifier (PGA) or the like that can arbitrarily adjust a gain and may be appropriately used as the amplifier 21.

The AD converter 22 converts an analog signal of the amplified output signal AMPO into a digital output signal DO by operating at a predetermined sampling frequency (e.g., 1 MHz). The digital output signal DO is provided to the demodulation process (= band pass filter process, peak detection process, or the like) of the PAM method in the logic part 30.

The comparator 23 compares the amplified output signal AMPO with a predetermined value (= a bias value at the time that the amplifier 21 does not output a signal) to generate a zero-cross detection signal ZX. The zero-cross detection signal ZX is provided to the demodulation process (= pulse number detection process or driving frequency detection process) of the PPM method or the PFM method in the logic part 30. However, if the sampling frequency of the AD converter 22 can be increased to a value (e.g., several tens of MHz) higher than the driving frequency of the burst signal Sb, the comparator 23 may be omitted.

### <Burst Signal>

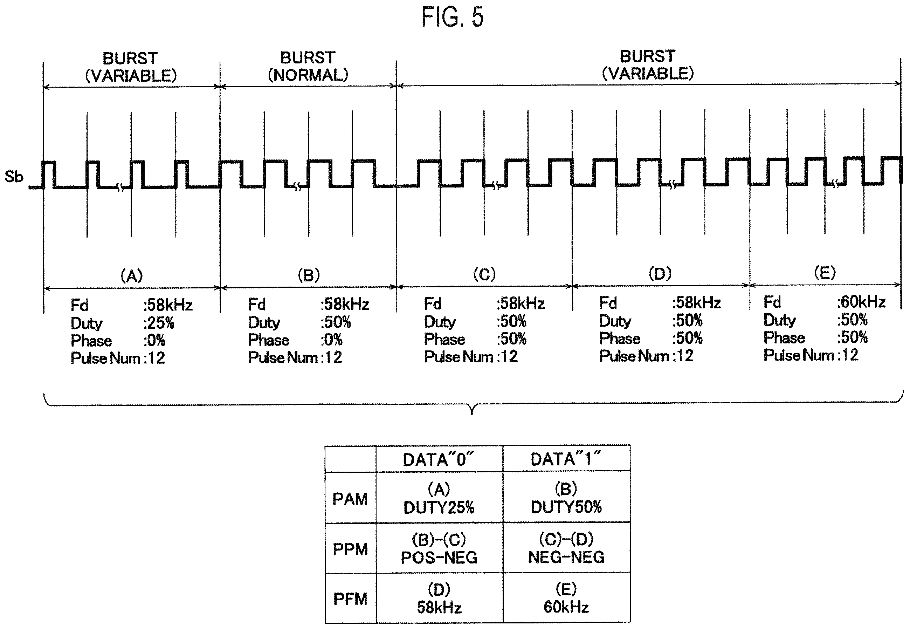

FIG. 5 is a diagram illustrating a modulation example of the burst signal Sb by the burst signal generation part 14. As described above, the burst signal generation part 14 modulates the burst signal Sb by the PAM method, the PPM method, or the PFM method when the ID information of the ultrasonic sensor 100 is superimposed on the output wave signal W1.

More specifically, the burst signal generation part 14 performs at least one of the duty control (PAM modulation), the phase control (PPM modulation), and the driving frequency control (PFM modulation) of the burst signal Sb when superimposing the ID information. Furthermore, in each modulation method, the minimum pulse number necessary for transmitting one bit of data is different. Therefore, the burst signal generation part 14 performs the pulse setting number control of the burst signal Sb as necessary, when superimposing the ID information.

In order to realize the aforementioned modulation process, the logic part 30 sets a driving frequency (Fd), a duty (Duty), phase (Phase), and a pulse setting number (Pulse Num) of the burst signal Sb as one set, and designates maximum m sets of groups of parameters to the burst signal generation part 14 by the modulation control signal Sc (for example, m is 8). That is, the modulation methods of the burst signal Sb may be freely combined.

Hereinafter, differences in the burst signal Sb between non-modulation (e.g., data "0" transmission) and modulation (e.g., data "1" transmission) will be described with reference to FIG. 5.

When the PAM modulation of the burst signal Sb is performed, the burst signal Sb is pulse-driven by a pattern (A) during data "0" transmission, and is pulse-driven by a pattern (B) during data"1" transmission. The burst signal Sb of the pattern (A) has a driving frequency of 58 kHz, a duty of 25%, a phase of 0%, and a pulse setting number of 12, and the burst signal Sb of the pattern (B) has a driving frequency of 58 kHz, a duty of 50%, a phase of 0%, a pulse setting number of 12. That is, during the PAM modulation, the duty of the burst signal Sb is variably controlled.

Furthermore, when the PPM modulation of the burst signal Sb is performed, the burst signal Sb is pulse-driven by a combination of patterns (B)-(C) (= normal-inversion) during data "0" transmission, and is pulse-driven by a combination of patterns (C)-(D) (= inversion-inversion) during data "1" transmission. Both the burst signals Sb of the patterns (C) and (D) have a driving frequency of 58 kHz, a duty of 50%, a phase of 50%, and a pulse setting number of 12. That is, during the PPM modulation, the phase of the burst signal Sb is variably controlled.

Furthermore, when the PFM modulation of the burst signal Sb is performed, the burst signal Sb is pulse-driven by the pattern (D) during data "0" transmission, and is pulse-driven by a pattern (E) during data "1" transmission. The burst signal Sb of the pattern (E) has a driving frequency of 60 kHz, a duty of 50%, a phase of 50%, and a pulse setting number of 12. That is, during the PFM modulation, the driving frequency of the burst signal Sb is variably controlled.

The settable ranges of various parameters set forth above may have, for example, a driving frequency of 30-80 kHz (Δ0.25 kHz increments), a duty of 1.56% to 100% (Δ1.56% increments), a phase of 1.56% to 100% (Δ1.56% increments), and a pulse setting number of 1-16 pulses (Δ1 pulse increments).

Hereinafter, various kinds of modulation methods (PAM, PPM, and PFM) mentioned above will be verified individually and specifically.

### <PAM Method (Duty Control)>

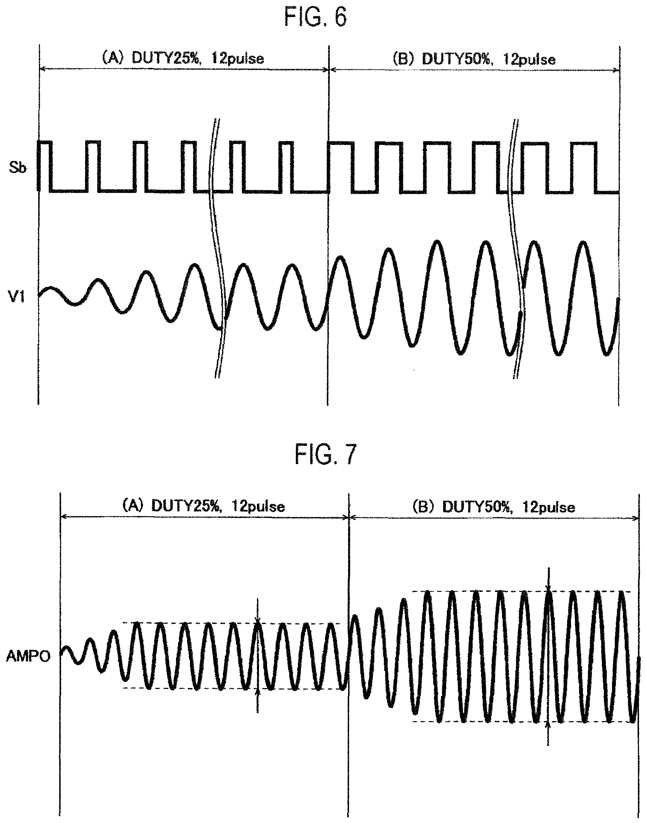

FIGS. 6 and 7 are diagrams illustrating driving waveforms (= a burst signal Sb and a piezoelectric element voltage VI) and reflected waveforms (= an amplified output signal AMPO) during the PAM modulation, respectively.

As illustrated in both drawings, after 12 pulses of the burst signal Sb are output with the duty of 25%, when it is switched to the duty of 50% and 12 pulses are further output, it can be seen that a change occurs in the amplitude of the amplified output signal AMPO according to the duty switching (pattern (A) → (B)).

In particular, for portions except for several pulses (for example, the first three pulses) in each transient change state of the first half 12 pulses (pattern (A)) and the second half 12 pulses (pattern (B)) of the amplified output signal AMPO, the respective amplitude values can be sufficiently compared. From this verification result, it can be said that a plurality of pulses (for example, about 4 pulses) are necessary to transmit one bit of data during the PAM modulation.

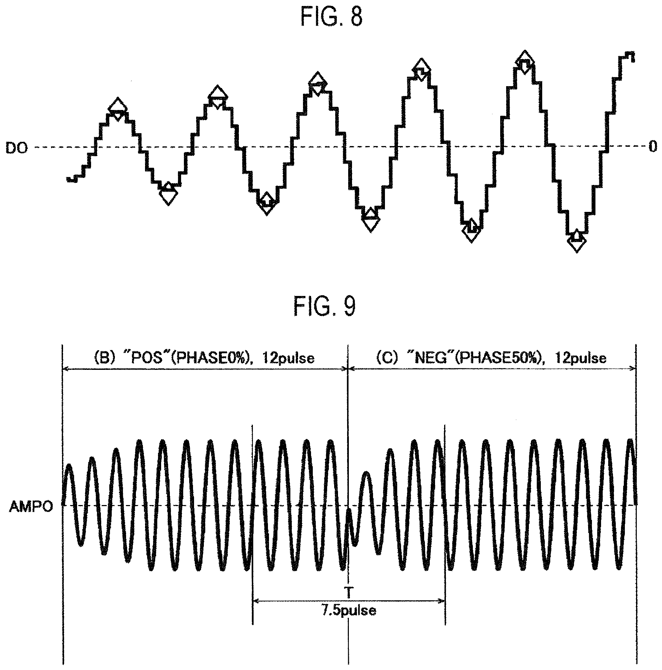

FIG. 8 is a diagram illustrating a peak detection operation during PAM demodulation, and illustrates a state in which the peak values of the digital output signal DO (*see* the rhombic marks in the drawing) gradually increase when the duty of the burst signal Sb is increased. In this drawing, the digital output signal DO processed by a bass pass filter (BPF) in the logic part 30 is depicted.

As illustrated in this drawing, the peak value of the digital output signal DO may be detected by the logic part 30 during the PAM demodulation, and the logic level of the data may be determined based on the detection result. The hardware processing or software processing may be performed for the peak value detection and logic level determination.

### <PPM Method (Phase Control)>

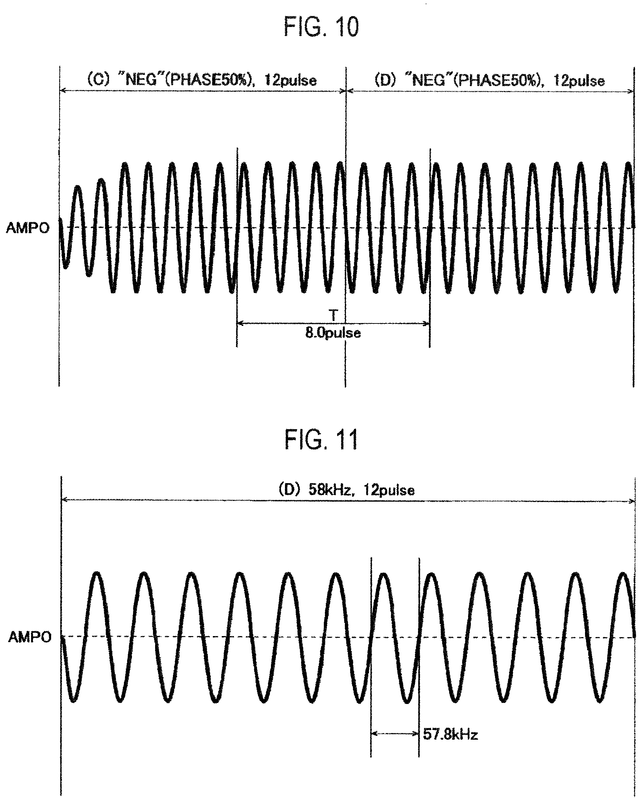

FIGS. 9 and 10 are diagrams illustrating reflected waveforms (= the amplified output signal AMPO) during the PPM modulation. The behavior during the phase inversion (during normal-inversion) is illustrated in FIG. 9, and the behavior of the same phase (during inversion-inversion) is illustrated in FIG. 10.

As illustrated in FIG. 9, after 12 pulses of the burst signal Sb are output with a normal phase POS (phase: 0%), when it is switched to an inverted phase NEG (phase: 50%) and 12 pulses are further output, namely when the burst signal Sb is pulse-driven by the combination of the patterns (B)-(C), the number of pulses within a fixed period T set to exceed the phase switching timing was approximately 7.5 pulses.

On the other hand, as illustrated in FIG. 10, after 12 pulses of the burst signals Sb are output with the inverted phase NEG (phase: 50%), when 12 pulses are further output with the inverted phase NEG (phase: 50%), namely when the burst signal Sb is pulse-driven by the combination of the patterns (C)-(D), the number of pulses within a fixed period T set to exceed the phase switching timing was approximately 8.0 pulses.

By performing the phase switching (normal-inversion vs inversion-inversion) of the burst signal Sb in this manner, since the pulse interval of the amplified output signal AMPO is changed by a half phase (0.5 pulse), it can be said that the PPM modulation is sufficiently possible.

Furthermore, as the timing control for setting the fixed period T, for example, the counting operation of the number of pulses is started when the number of peaks of the amplified output signal AMPO reaches a predetermined value (e.g., the sixth peak), and the number of pulses after the elapse of the fixed period T may be obtained. In addition, as another method of phase switching determination, a required time until a predetermined number of pulses is detected is measured, and whether or not the phase switching has been performed may be determined from the measurement result.

### <PFM Method (Driving Frequency Control)>

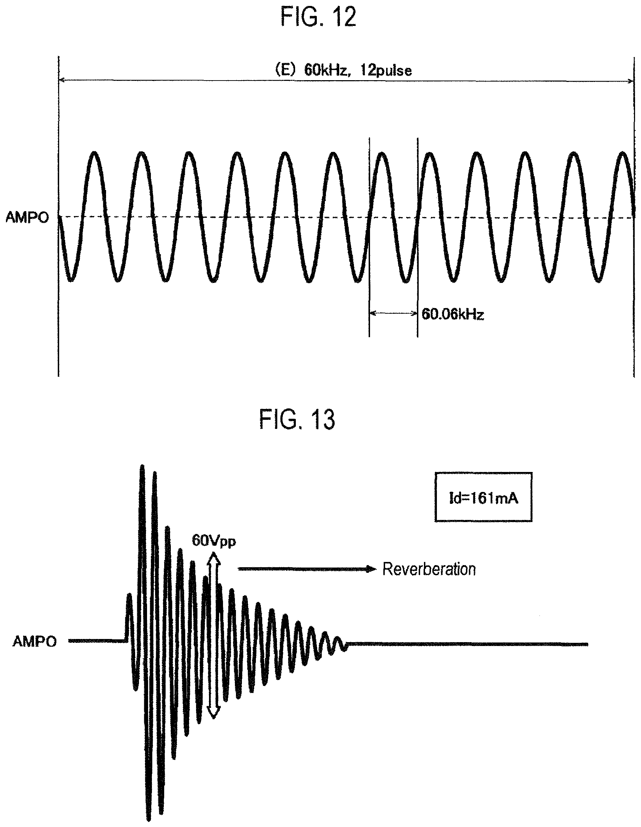

FIGS. 11 and 12 are diagrams illustrating reflected waveforms (= the amplified output signal AMPO) during the PFM modulation. The behavior during 58 kHz driving (pattern (D)) is illustrated in FIG. 11, and the behavior during 60 kHz driving (pattern (E)) is illustrated in FIG. 12.

As illustrated in FIG. 11, when the burst signal Sb is pulse-driven by the pattern (D) (driving frequency: 58 kHz), the frequency of the amplified output signal AMPO was 57.8 kHz.

On the other hand, as illustrated in FIG. 12, when the burst signal Sb is pulse-driven by the pattern (E) (driving frequency: 60 kHz), the frequency of the amplified output signal AMPO was 60.06 kHz.

In this manner, if the driving frequency of the burst signal Sb is switched, the frequency of the amplified output signal AMPO changes accordingly, and thus, it can be said that the PFM modulation is sufficiently possible.

As a method for measuring the frequency of the amplified output signal AMPO, for example, a zero-cross timing of the amplified output signal AMPO is detected by the logic part 30 based on the zero-cross detection signal ZX generated by the comparator 23 of FIG. 4, and the frequency may be calculated from the detection result.

### <PAM Method (Driving Current Control)>

In FIGS. 6 and 7, there has been described an example in which the duty control of the burst signal Sb is performed during the PAM modulation, but the PAM modulation of the output wave signal W1 may also be realized by controlling the current value of the driving current Id generated by the current source 12 (*see* FIG. 3).

FIGS. 13 to 15 are diagrams illustrating examples of the PAM modulation by the driving current control, and illustrate amplitude change behaviors of the amplified output signal AMPO according to a magnitude of the driving current Id.

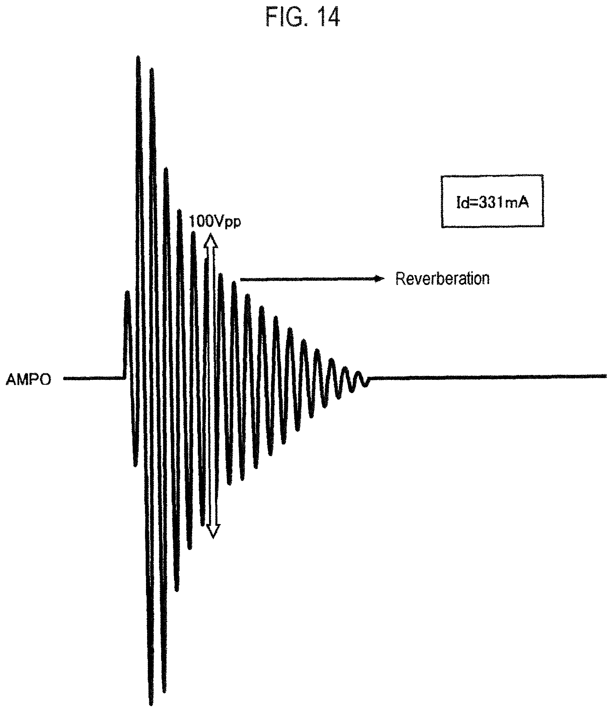

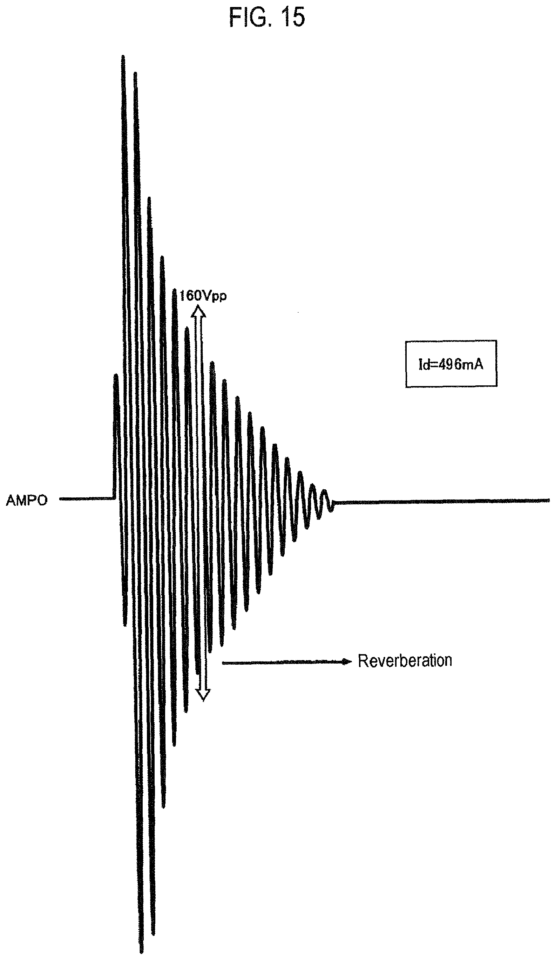

As illustrated in FIG. 13, when Id=161 mA, the amplitude of the amplified output signal AMPO at during a stable time is about 60 Vpp. Furthermore, as illustrated in FIG. 14, when ld=331 mA, the amplitude of the amplified output signal AMPO during a stable time is about 100 Vpp. In addition, as illustrated in FIG. 15, when Id=496 mA, the amplitude of the amplified output signal AMPO during a stable time is about 160 Vpp.

In this manner, if the current value of the driving current Id is switched, the amplitude of the amplified output signal AMPO during a stable time changes accordingly, and thus, it can be said that the PAM modulation by the driving current control is sufficiently possible.

In order to realize the PAM modulation by the driving current control, the current source has a function of switching the current capability on the time axis and the current value control of the driving current Id may be performed when superimposing the ID information. Furthermore, the settable range of the driving current value Id may be, for example, about 96 to 600 mA.

### <Sonar for Vehicle>

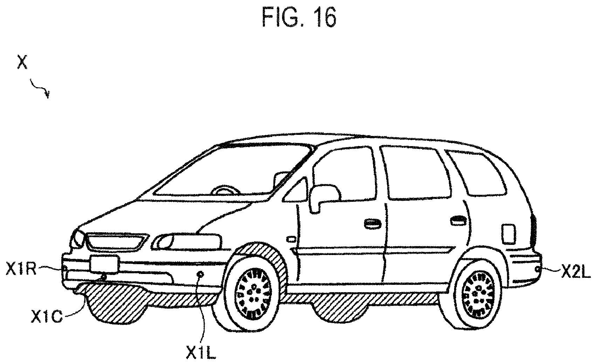

FIG. 16 is an external view of a vehicle. On a front bumper of a vehicle X, a front sonar XI (L, R, C) is installed at each of its left and right corner portions and center portion. Also, on a rear bumper of the vehicle X, a back sonar X2 (L, R, C) is installed at each of its left and right corner portions and center portion (for convenience of illustration, back sonars X2R and X2C are not shown).

By mounting the front sonar XI (L, R, C) and the back sonar X2 (L, R, C) in the vehicle X in this manner, since the proximity detection and distance measurement of the detection object (= obstacle, other vehicle, passerby, or the like) around the vehicle X can be performed, it is possible to support a driver's safe driving.

As the front sonar XI (L, R, C) and the back sonar X2 (L, R, C), the ultrasonic sensors 100 described above can be respectively applied.

### <Other Modifications>

Furthermore, in the aforementioned embodiment, there has been described an example in which the ultrasonic sensor 100 is applied as a vehicle sonar. However, the application object of the ultrasonic sensor 100 is not limited thereto and it may be widely applied to a parking management system in which an ultrasonic sensor 100 is installed in each parking space, a humidity sensor, a snow depth meter, an object detector of a belt conveyer, a liquid amount detector at the time of tank injection, a human body sensor such as an automatic door or an intrusion monitoring device, various displacement measuring instruments, or the like.

The ultrasonic sensor disclosed herein can be utilized as, for example, an external sensor of a vehicle.

According to the present disclosure in some embodiments, it is possible to provide an ultrasonic sensor which hardly causes any interference with another ultrasonic sensor.

While certain embodiments have been described, these embodiments have been presented by way of example only, and are not intended to limit the scope of the disclosures. Indeed, the embodiments described herein may be embodied in a variety of other forms. Furthermore, various omissions, substitutions and changes in the form of the embodiments described herein may be made without departing from the spirit of the disclosures. The accompanying claims and their equivalents are intended to cover such forms or modifications as would fall within the scope and spirit of the disclosures.

## Claims

1. An ultrasonic sensor (100), comprising:
a transmitter (10) configured to superimpose ID information on an output wave signal (W1) and transmit the output wave signal (W1) in an ultrasonic region using a piezoelectric element (1);
a receiver (20) configured to receive an input wave signal (W2) in the ultrasonic region using the piezoelectric element (1) or an additional piezoelectric element; and
a logic part (30) configured to control the transmitter (10) and the receiver (20), and perform proximity detection and distance measurement of a detection object (200) by identifying the input wave signal (W2) based on the ID information.

2. The ultrasonic sensor (100) of Claim 1, wherein the transmitter (10) comprises:
a transformer (11) configured to drive the piezoelectric element (1) on a secondary winding (L2) side according to a driving current (Id) flowing through a primary winding (L1);
a current source (12) configured to generate the driving current (Id);
a switch (13) configured to turn on and off the driving current (Id) according to a burst signal (Sb); and
a burst signal generation part (14) configured to generate the burst signal (Sb).

3. The ultrasonic sensor (100) of Claim 2, wherein the burst signal generation part (14) is further configured to perform at least one of duty control, phase control, and driving frequency control on the burst signal (Sb) when the ID information is superimposed.

4. The ultrasonic sensor (100) of Claim 3, wherein the burst signal generation part (14) is further configured to perform pulse setting number control on the burst signal (Sb) when the ID information is superimposed.

5. The ultrasonic sensor (100) of Claim 4, wherein the logic part (30) is further configured to designate a driving frequency, a duty, a phase, and a pulse setting number for the burst signal (Sb) as one set.

6. The ultrasonic sensor (100) of Claim 2, wherein the current source (12) is further configured to perform current value control on the driving current (Id) when the ID information is superimposed.

7. The ultrasonic sensor (100) of any one of Claims 1 to 6, wherein the transmitter (10) is further configured to superimpose communication information on the output wave signal (W1).

8. The ultrasonic sensor (100) of any one of Claims 1 to 7, wherein the receiver (20) comprises:
an amplifier (21) configured to amplify the input wave signal (W2) to generate an amplified output signal (AMPO); and
an A/D converter (22) configured to convert the amplified output signal (AMPO) into a digital output signal (DO).

9. The ultrasonic sensor (100) of Claim 8, wherein the receiver (20) further comprises a comparator (23) configured to compare the amplified output signal (AMPO) with a predetermined value to generate a zero-cross detection signal (ZX).

10. The ultrasonic sensor (100) of any one of Claims 1 to 9, wherein the logic part (30) is further configured to perform the proximity detection of the detection object (200), based on whether the input wave signal (W2) on which the ID information is superimposed is received or not.

11. The ultrasonic sensor (100) of any one of Claims 1 to 10, wherein the logic part (30) is further configured to perform the distance measurement of the detection object (200) based on an elapsed time from a transmission of the output wave signal (WI) on which the ID information is superimposed to a reception of the input wave signal (W2) on which the ID information is superimposed.

12. A vehicle (X) comprising the ultrasonic sensor (100) of any one of Claims 1 to 11 for performing the proximity detection and the distance measurement of the detection object (200).
